Europäisches Patentamt

European Patent Office

Office européen des brevets

(19)

(11) Publication number : **0 498 671 A1**

## (12) EUROPEAN PATENT APPLICATION

(21) Application number : 92301061.5

(22) Date of filing : 07.02.92

(51) Int. Cl.$^5$ : **B65G 15/16**

(30) Priority : **08.02.91 JP 37701/91**

(43) Date of publication of application :
**12.08.92 Bulletin 92/33**

(84) Designated Contracting States :
**AT GB IT**

(71) Applicant : **BRIDGESTONE CORPORATION**
**10-1 Kyobashi 1-Chome, Chuo-Ku**
**Tokyo 104 (JP)**

(72) Inventor : **Kuroda, Kimihide**
**668-8, Shiromeguri, Kamakura City**
**Kanagawa Pref. (JP)**

(74) Representative : **Whalley, Kevin et al**
**MARKS & CLERK 57/60 Lincoln's Inn Fields**
**London WC2A 3LS (GB)**

(54) **Belt conveyor system.**

(57)    A conveyor belt apparatus has a pair of end-lessly running flat belts (1,8) partly overlapped with each other along their running course for sandwiching a material (19) to be conveyed between the overlapped portions. In this case, a pair of pushing plates (21, 22) are arranged in parallel with the running direction of the overlapped portions of the belts so as to be in sliding contact with a rear surface of each of the belts and fixed to a fastening body.

*FIG. 1*

EP 0 498 671 A1

This invention relates to a belt conveyor system comprising a pair of endlessly running flat belts partly overlapped with each other at its running course and sandwiching a material to be conveyed between the overlapped portions for transportation.

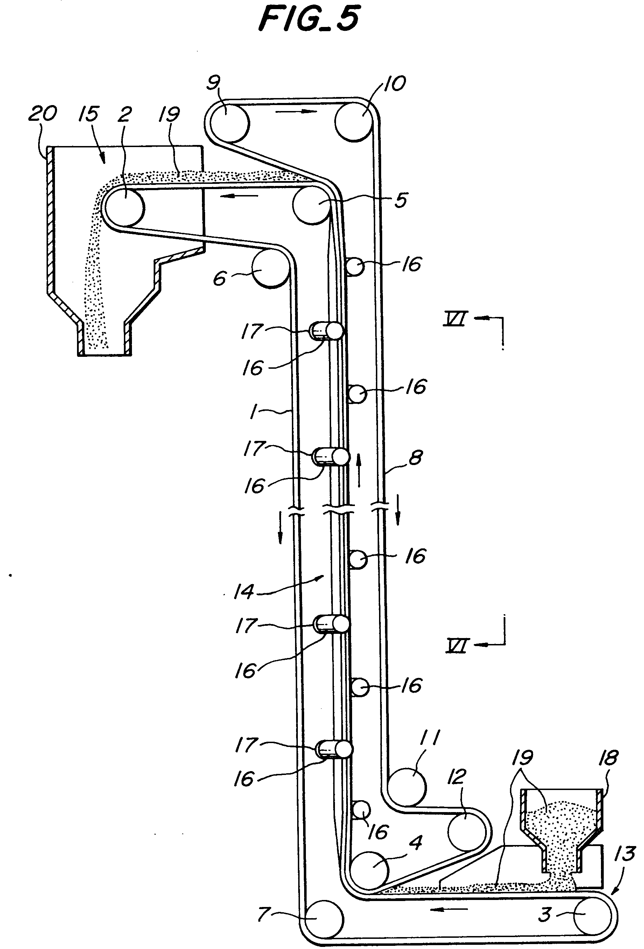

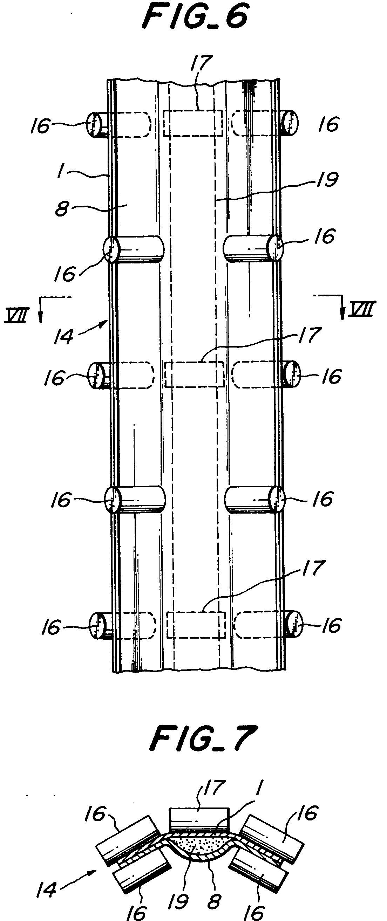

An example of this type of the conventional belt conveyor system is shown in Figs. 5 to 7.

In this case, a primary belt 1 comprised of an endless flat belt is extended between a driving roller 2 driven by a motor (not shown) and a driven roller 3 through middle guide rollers 4, 5, 6, 7 in form of a crank and run in a direction shown by an arrow.

A secondary belt 8 comprised of an endless flat belt is extended through the guide rollers 4, 5 as well as another guide rollers 9, 10, 11, 12 in form of a crank and is overlapped with the primary belt 1 between the guide rollers 4 and 5 to run in a direction shown by an arrow owing to friction force produced by the overlapping of these belts.

In this system, a zone of the primary belt 1 ranging from the driven roller 3 to the guide roller 4 forms a horizontal supply portion 13, and a zone of the overlapped portions of the belts 1, 8 between the guide rollers 4 and 5 forms a vertically transporting portion 14, and a zone of the primary belt 1 ranging from the guide roller 5 to the driving roller 2 forms a horizontal discharge portion 15.

Both side regions of the belts 1, 8 in the transporting portion 14 are alternately pushed to each other from front and rear sides by many horizontal pinch rollers 16 arranged at a given interval in a vertical direction and pivotably supported by a frame (not shown).

On the other hand, the central region at rear surface of the primary belt 1 is pushed by many horizontal back-up rollers 17 arranged at a given interval in a vertical direction and pivotably supported by the frame.

In the belt conveyor system of the above structure, when a granular or powdery material 19 to be conveyed is discharged from a supply hopper 18 onto the center of the supply portion 13 of the primary belt 1, the conveying material 19 is sandwiched between the belts 1 and 8 at the position of the guide roller 4 to rise upward in the transporting portion 14.

During the rising, the conveying material 19 is not fallen outward from both side regions of the belts 1, 8 in the transporting portion 14 because both side regions are pushed to each other by the pinch rollers 16. And also, the conveying material 19 is not dropped downward between the belts 1, 8 because the backward expansion of the primary belt 1 at its central region is prevented by the back-up rollers 17. As a result, the conveying material 19 is discharged from the discharge portion 15 of the primary belt 15 into a receiving hopper 20.

As mentioned above, such a conveyor belt system can transport the granular or powdery conveying material 19 sandwiched between the belts 1, 8 at 90° or an angle near to 90° with respect to the horizontal direction under the action of pinch rollers 16 and back-up rollers 17.

In such a conveyor belt system, however, it becomes very complicated to adjust many pinch rollers 16 for uniformly pushing both side regions of the belts 1, 8 in the transporting portion 14 to each other under an adequate pressure.

Further, the above conventional conveyor belt system has problems that when the conveying material 19 sandwiched between the belts 1, 8 will spread in all directions, both the belts 1, 8 are expanded in front and rear directions between the upper and lower adjoining pinch rollers 16 to encroach the inner edge corner portion of each of the pinch rollers 16 onto the belts 1, 8, whereby the resistance to the running of the belt is increased to obstruct the smooth running of the belts 1, 8, and the wearing of the belts 1, 8 through the pinch rollers 16 becomes violent to degrade the durability of the belt, and the like.

It is, therefore, an object of the invention to solve the aforementioned problems of the conventional technique and to provide a conveyor belt system which can smoothly run the belt without causing local concentration of stress in the belt and simplify the adjusting operation.

According to the invention, there is the provision of a conveyor belt system comprising a pair of endlessly running flat belts partly overlapped with each other at its running course and sandwiching a material to be conveyed between the overlapped portions, characterized in that a pair of pushing plates are arranged in parallel with the running direction of the overlapped portions of the belts so as to sliding contact with a rear surface of each of the belts and fixed to a fastening body, whereby the running of the belts are guided at a state that at least both side zones of the overlapped portions of the belts are sandwiched by the pushing plates.

In the invention, both side zones of the belts are passed between a pair of the pushing plates at an overlapped state, so that if both the belts are expanded to separate the side regions of the overlapped portions of the belt from each other under an action of inner pressure through the conveying material sandwiched between the belts, such a separation is prevented by a pair of the pushing plates.

Furthermore, both the pushing plates are arranged in parallel with the running direction of the belt and sliding contact with the rear surfaces of the belts, so that the durability of the belt is improved without causing the local concentration of stress in the belt.

The invention will be described with reference to the accompanying drawings, wherein:

Fig. 1 is a side view of a first embodiment of the conveyor belt system according to the invention;
Fig. 2 is a partially cutaway perspective view taken along a line II-II of Fig. 1;

Fig. 3 is a sectional view taken along a line III-III of Fig. 2;

Fig. 4 is a sectional view of a second embodiment of the conveyor belt system similar to the case of Fig. 3;

Fig. 5 is a side view of the conventional conveyor belt system;

Fig. 6 is a partially cutaway perspective view taken along a line VI-VI of Fig. 5; and

Fig. 7 is a sectional view taken along a line VII-VII of Fig. 6.

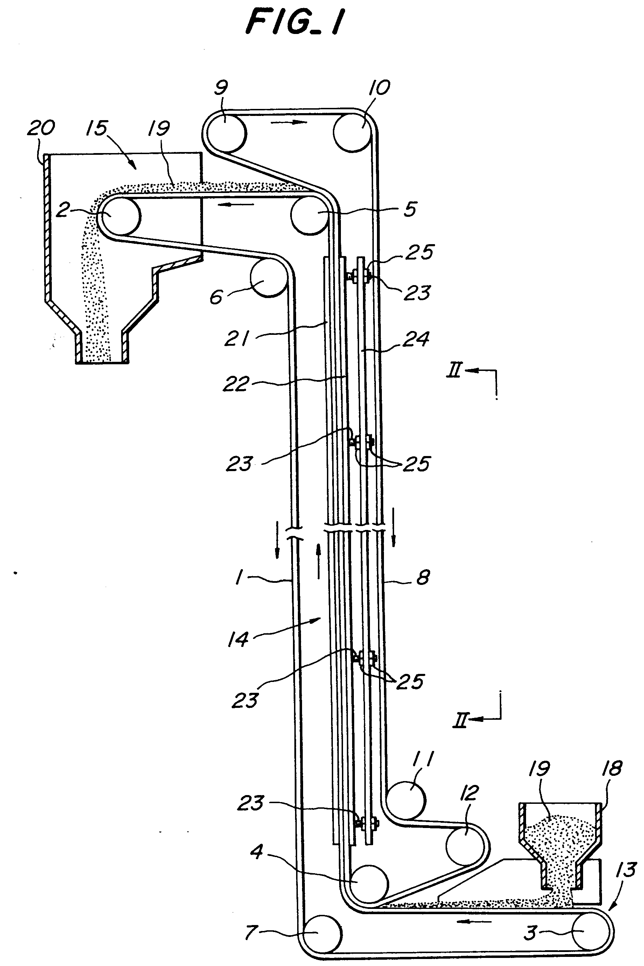

In Figs. 1 to 3 is shown a first embodiment of the conveyor belt system according to the invention in which the same parts as in the above conventional system are indicated by the same numerals and their explanations are omitted.

In this embodiment, a first pushing plate 21 sliding contacts with the rear surface of the primary belt 1 in the transporting portion 14 ranging from the guide roller 4 to the guide roller 5 in stead of the many pinch rollers 16 and back-up rollers 17 and is fixed to a frame (not shown) as a fastening body so as to extend in parallel with the primary belt 1 and in up and down directions.

Similarly, a pair of second elongated pushing plates 22, 22 having a length equal to that of the first pushing plate 21 are arranged in parallel with the first pushing plate 21 and sliding contact with the rear surface of the secondary belt 8 at their both side zones instead of the many pinch rollers 16.

Each of the first and second pushing plates 21 and 22 may preferably be made from high molecular weight polyethylene, super-high molecular weight polyethylene or other synthetic resins materials having a small friction coefficient. Moreover, powdery calcium carbonate, talc powder, zinc white, Teflon (trade name) powder or other powder having a good lubricity or a mixture thereof may be supplied to a sliding contact portion between the first or second pushing plate (21, 22) and the primary or secondary belt (1, 8).

Each of the second pushing plates 22 is bolted at a position-adjustable state in front and rear directions through a pair of nuts 25, 25 after front portions of plural bolts 23 vertically stood on the front surface of the pushing plate in place are inserted into respective holes formed in a support plate 24 for the frame, so that such pushing plates push down the secondary belt 8 under an adequate pressure.

In the first embodiment of the above construction, therefore, the primary belt 1 is never expanded backward by the conveying material 19 and also the secondary belt 8 is never locally expanded forward because the opposed surfaces of both side zones of the overlapped portions in both the belts 1, 8 are uniformly pushed to each other over their full surfaces, and consequently both the belts 1, 8 are smoothly run.

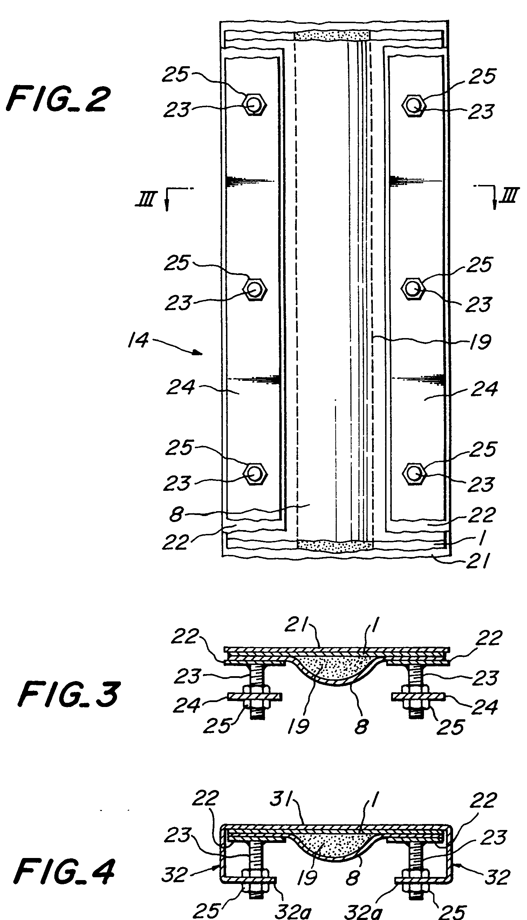

In Fig. 4 is shown a second embodiment of the invention, in which both side ends of a first pushing plate 31 corresponding to the first pushing plate 21 of the first embodiment are bent forward to form a pair of bent portions 32, 32 enclosing both side ends of the belts 1, 8.

The same second pushing plates 22, 22 as in the first embodiment are disposed on both side zones of the front surface of the secondary belt 8 and pushed thereto under an adequate pressure by inserting front portions of bolts 32 vertically stood on the front surface of the pushing plate in place into respective holes formed in a flange 32a of the bent portion 32 and bolting at a position adjustable state in front and rear directions through nuts 25, 25.

In the second embodiment, the same function and effect as in the first embodiment are developed, but also the meandering of either the primary belt 1 or the secondary belt 8 or both as well as the laterally position displacement between the belts 1 and 8 are prevented because the bent portions 32 sliding contact with the side edges of the belts 1, 8.

Moreover, the invention may be practiced at various modifications in addition to the above embodiments.

For example, the first pushing plate 21 or 31 is divided into a pair of pushing plate members as in the second pushing plate to sliding contact with only both side zones of the rear surface of the primary belt 1. In this case, the central zone of the primary belt 1 does not come into sliding-contact with the first pushing plate.

Furthermore, the position of the second pushing plate 22 may be adjusted in a moving direction with respect to the first pushing plate 21, 31 by fixing only the central position of the second pushing plate in longitudinal direction or only two positions of upper and lower end portions thereof through the bolt 23 and nuts 25, or by the other position adjusting means.

The invention develops the following effects.

(a) The running of the belts are guided by a pair of pushing plates arranged in parallel with the running directions of the overlapped portions of the belts so as to sandwich at least both end zones of the overlapped portions of the belts instead of the conventionally used pinch rollers, so that each of the pushing plates uniformly sliding contacts with the belt in its longitudinal direction without causing local concentration of stress in the belts, and consequently the durability of the belt can be improved and also the belts can smoothly be run.

(b) The adjustment of the distance between a pair of the opposed pushing plates may be carried out by moving one of the pushing plates with respect to the other pushing plate, so that the adjusting operation becomes more simple as compared with the case that many pinch rollers should separately be adjusted in the conventional technique.

(c) When at least one of the pushing plates is bent at both sides so as to sliding contact with the both side edges of the belts, the position displacement between the belts and the meandering of the belts can be prevented. And also, when both side edges of the belts are enclosed by the first and second pushing plates and the bent portions of the first pushing plate, even if the conveying material leaks out from the overlapped portions of the belts at their side edges, the scattering out of the material from the system can be prevented, which is particularly suitable when the conveying material is powder.

## Claims

1. A conveyor belt apparatus comprising a pair of endlessly running flat belts (1,8) partly overlapped with each other along their running course for sandwiching a material (19) to be conveyed between the overlapped portions, characterized in that a pair of pushing plates (21,22;31,22) are arranged in parallel with the running direction of the overlapped portions of the belts so as to be in sliding contact with a rear surface of each of the belts and fixed to a fastening body, whereby the running of the belts are guided in a state that at least both side zones of the overlapped portions of the belts are sandwiched by the pushing plates.

2. A conveyor belt apparatus as claimed in claim 1, characterized in that at least one of said pushing plates (22) is fixed to said fastening body at a position adjustable state in a moving direction with respect to the other pushing plate.

3. A conveyor belt apparatus as claimed in claim 1 or 2, characterized in that at least one of said pushing plates (31) is bent at both side end zones (32) so as to be in sliding contact with both side edges of said belts.

# FIG_1

FIG_2

FIG_3

FIG_4

## FIG_5

## FIG_6

## FIG_7

**European Patent Office**

# EUROPEAN SEARCH REPORT

Application Number

EP 92 30 1061

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 382 502 (BERESINSKY) <br> * column 13, line 36 - column 13, line 62 * <br> * column 14, line 30 - column 14, line 54; figures 21,22,23,24 * <br> --- | 1 | B65G15/16 |
| X | WO-A-8 601 491 (FRIEDRICH WILH. SCHWING) <br> * page 9, line 22 - page 10, line 15; figures 6,7,8 * <br> --- | 1 | |
| X | DE-B-1 257 668 (POHLIG-HECKEL-BLEICHERT) <br> * the whole document * <br> ----- | 1 | |

TECHNICAL FIELDS SEARCHED (Int. Cl.5)

B65G

The present search report has been drawn up for all claims

| Place of search | Date of completion of the search | Examiner |
|---|---|---|
| THE HAGUE | 12 MAY 1992 | OSTYN T.J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)